Europäisches Patentamt

European Patent Office

Office européen des brevets

(19)

(11) Veröffentlichungsnummer: **0 044 414**
**A1**

(12) # EUROPÄISCHE PATENTANMELDUNG

(21) Anmeldenummer: 81104742.2

(22) Anmeldetag: 20.06.81

(51) Int. Cl.³: **B 60 R 11/00**
**A 45 C 7/00, B 62 J 7/00**

(30) Priorität: 19.07.80 DE 3027453

(43) Veröffentlichungstag der Anmeldung:
27.01.82 Patentblatt 82/4

(84) Benannte Vertragsstaaten:
BE CH FR LI NL

(71) Anmelder: Hein Gericke GmbH & Co. KG
Speditionsstrasse 1-3
D-4000 Düsseldorf 1(DE)

(72) Erfinder: Gericke, Hein
Rheinallee 117
D-4000 Düsseldorf(DE)

(74) Vertreter: Stenger, Alex, Dipl.-Ing. et al,
Patentanwälte Dipl.-Ing. A. Stenger Dipl.-Ing. W.
Watzke, Dipl.-Ing. H.J. Ring Kaiser-Friedrich-Ring 70
D-4000 Düsseldorf 11(DE)

(54) Tankrucksack.

(57) Zwecks Bereitstellung eines variablen Aufnahmevolumens und einer Verstellbarkeit seiner Bauhöhe hat der separate Rucksackteil eine faltbare Umfangswand (5) und ist mit Verstellmitteln (4) zur variablen Einstellung des Aufnahmevolumens versehen. Vorzugsweise bestehen die Verstellmittel (4) aus einem Reißverschluß, dessen zwei Zahnreihen in einem den gewünschten Verstellbereich erfassenden Abstand zueinander umlaufend an der faltbaren Umfangswand (5) befestigt sind.

Fig.1

EP 0 044 414 A1

T a n k r u c k s a c k

Die Erfindung betrifft einen Tankrucksack für Motorräder mit einem auf dem Motorradtank zu befestigenden gepolsterten Boden, über dem ein abnehmbarer separater
Rucksackteil angeordnet ist.

Ein derartiger Tankrucksack ist bekannt. Er weist einen
etwa 10 cm hohen Boden-Behälterteil auf, der mit Riemen
und Schnallen auf dem Tank des Motorrads befestigt wird.
Mit diesem Behälterteil ist abnehmbar durch einen umlaufenden Reißverschluß ein separater Rucksackteil verbindbar, der z.B. zur Aufnahme von Wertsachen vorgesehen ist
und beim Parken nicht auf dem Motorrad verbleiben soll.
Der Rucksackteil ist auf der Oberseite mit einem Klarsichtfach versehen, in welches eine Karte eingeschoben
werden kann. Nachteilig ist bei diesem bekannten Tankrucksack, daß er außerordentlich hoch baut und keine Anpassung seiner Größe an das tatsächlich benötigte Füllvolumen ermöglicht.

Der Erfindung liegt die Aufgabe zugrunde, einen Tankrucksack mit variablem Aufnahmevolumen und einer Verstellbarkeit seiner Bauhöhe zu schaffen, um eine best-

0044414

- 2 -

mögliche Anpaßbarkeit an die gerade notwendige Befüllung
zu gewährleisten.

Die Aufgabe ist erfindungsgemäß dadurch gelöst, daß der
separate Rucksackteil eine faltbare Umfangswand hat und
mit Verstellmitteln zur variablen Einstellung des Aufnahmevolumens versehen ist. Vorzugsweise bestehen die
Verstellmittel aus einem Reißverschluß, dessen zwei Zahnreihen in einem den gewünschten Verstellbereich erfassenden Abstand zueinander umlaufend an der faltbaren Umfangswand befestigt sind. Ausgehend vom größtmöglichen
Aufnahmevolumen wird die Verkleinerung bei dieser Ausfürungsform dadurch erzielt, daß der Bereich zwischen den
Zahnreihen des Reißverschlusses bei einer Betätigung des
Reißverschlusses nach innen eingefaltet wird und hierdurch die Bauhöhe entsprechend, beispielsweise um 10 cm,
verringert wird.

Gemäß einer besonders vorteilhaften Ausgestaltung der
Erfindung ist vorgeschlagen, daß der Anfang des Reißverschlusses mittig in der Umfangswand befestigt ist, die
beiden Zahnreihen des Reißverschlusses dann keilförmig
auseinander laufend angeordnet sind bis ein erster Faltbereich durch den Abstand der Zahnreihen voneinander
festgelegt ist, daß daran anschließend die beiden Zahnreihen parallel zueinander um den Umfang des Rucksackteils bis zum Beginn der Parallelerstreckung herum geführt sind, daß hieran anschließend erneut eine keilförmige Erweiterung bis zur Festlegung eines zweiten Faltbereichs vorgesehen ist, an die sich wiederum eine umlaufende Parallelanordnung der Zahnreihen anschließt. Bei
dieser Ausführungsform ist es möglich, den Tankrucksack
von seinem größten Aufnahmevolumen zweistufig mittels
einer einzigen Reißverschlußbetätigung zu verkleinern und damit die Anpassung an den gewünschten Raumbedarf vorzunehmen. Die verschiedenen Verstellbereiche können dabei durch Laschenverschlüsse separat fixierbar sein. Selbstverständlich kann im Rahmen der Erfindung auch eine mehr als zweistufige Verstellung in der beschriebenen Weise vorgesehen werden.

Es erscheint ungünstig, daß bei den bekannten Tankrucksäcken ein relativ großes Bodenfach immer auf dem Tank des Motorrades verbleibt. Es ist daher vorgeschlagen, daß der abnehmbare Rucksackteil sich bis zum Boden erstreckt, in welchem eine mittige Ausnehmung zur Aufnahme eines Tragegriffes des abnehmbaren Rucksackteils vorgesehen ist. Beim Verlassen des Motorrades wird mittels eines umlaufenden Reißverschlusses der abnehmbare Rucksackteil vom Boden getrennt, der dann allein praktisch in Form einer Schaumstoffmatte mit hochstehendem Rand für den Reißverschluß auf dem Tank des Motorrades verbleibt. Jeglicher Anreiz zu einem Diebstahl ist damit beseitigt.

Zur leichten Befüllung des abnehmbaren Rucksackteils ist vorgeschlagen, einen mittels Reißverschluß abklappbaren Deckel vorzusehen, in welchem außen die an sich bekannte Klarsichttasche ausgebildet ist.

Weitere Einzelheiten, Merkmale und Vorteile des Gegenstands der Erfindung ergeben sich aus der nachfolgenden Beschreibung der zugehörigen Zeichnung, in der ein erfindungsgemäßer Tankrucksack schematisch dargestellt ist. In der Zeichnung zeigt:

Fig. 1      einen zusammengefalteten Tankrucksack, perspektivisch,

- 4 -

Fig. 2      einen um den ersten Verstellbereich vergrößerten Tankrucksack,

Fig. 3      einen zusätzlich um den zweiten Verstellbereich vergrößerten Tankrucksack,

Fig. 4      eine Teilansicht auf den Boden des Tankrucksacks und

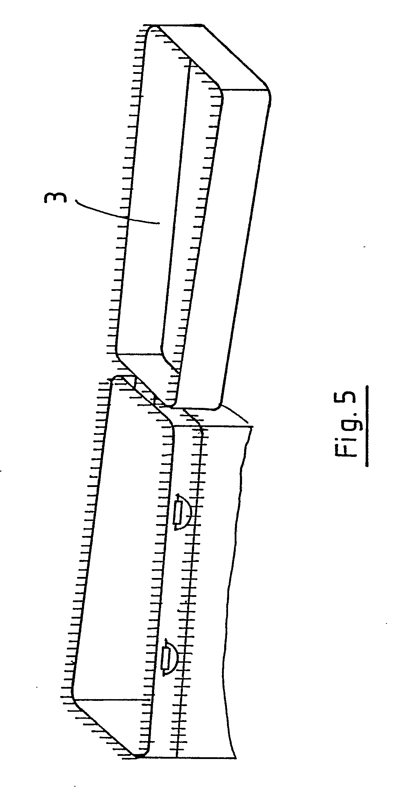

Fig. 5      eine Teilansicht des Deckels des Tankrucksacks.

Der Tankrucksack 1 besteht aus einem durch Öffnen eines umlaufenden Reißverschlusses 2 abklappbaren Deckel 3, einem als Verstellmittel zur variablen Einstellung des Aufnahmevolumens dienenden Reißverschluß 4, der auf eine faltbare Umfangswand 5 wirkt und einem durch einen Reißverschluß 6 abtrennbaren Boden 7.

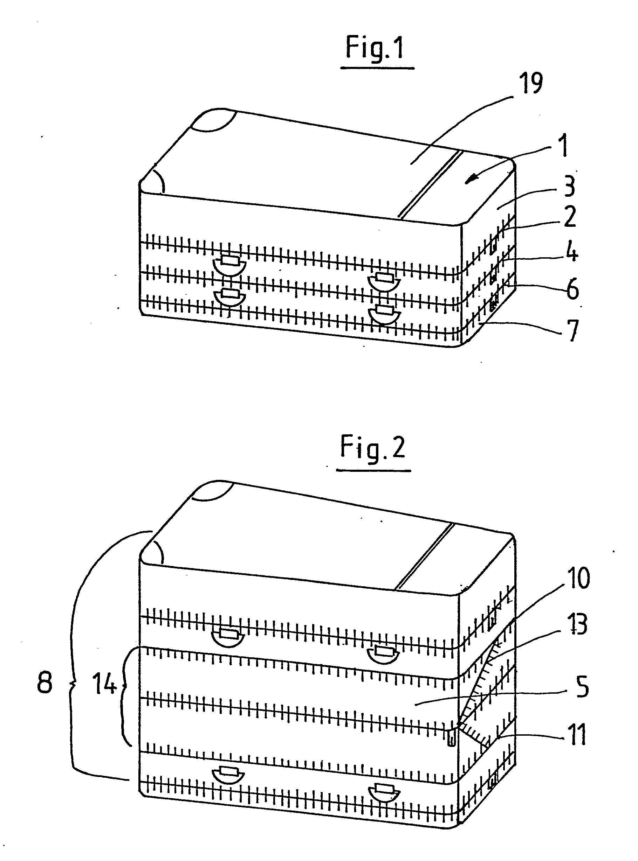

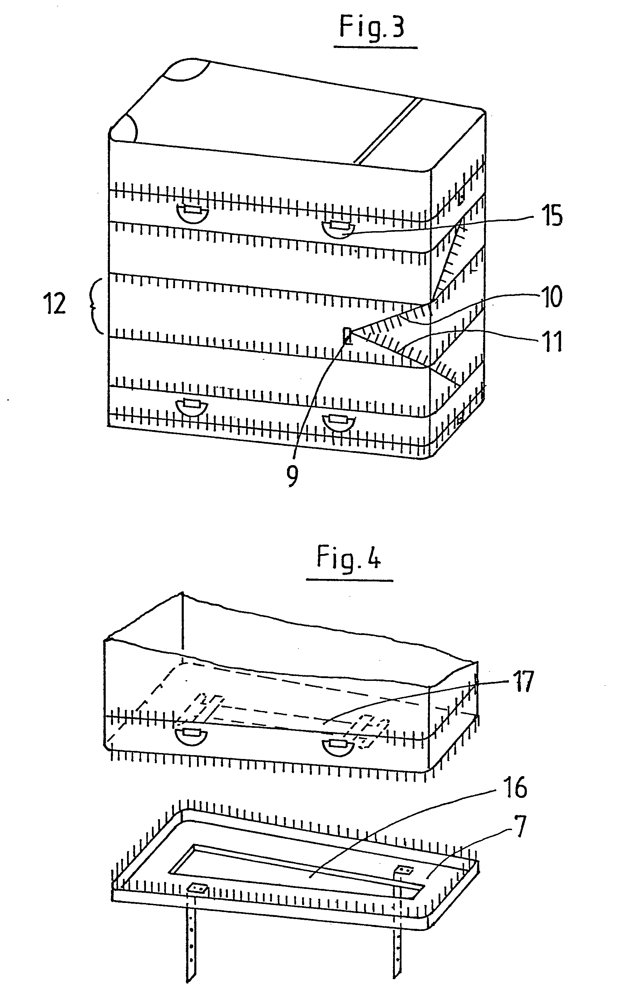

Wesentlicher Teil des Tankrucksacks 1 ist der vom Boden 7 separat abnehmbare Rucksackteil 8, dessen faltbare Umfangswand 5 mittels des in besonderer Weise geführten Reißverschlusses 4 zweistufig verstellbar ist. Die erste Verstellkappe ist in Fig. 2 der Zeichnung dargestellt. Die erste und zweite Verstellstufe ergeben sich aus Fig. 3 der Zeichnung, auf die nachfolgend Bezug genommen ist. Es ist erkennbar, daß der Reißverschluß 4 mit seinem Beginn etwa in der Mitte der Umfangswand 5 befestigt ist. Der Reißverschlußbeginn ist mit der Bezugsziffer 9 gekennzeichnet. Grundsätzlich besteht ein Reißverschluß aus zwei Reihen vieler kleiner gegeneinander versetzt angeordneter Metallzähnchen, sogenannten Zahnreihen, und einem keilförmigen Metallstück (Herzstück) in einem Schieber, der die beiden Verschlußreihen klammerartig in-

- 5 -

einandergreifend miteinander verbinden kann. Normalerweise sind die beiden Zahnreihen von Reißverschlüssen nahe beieinander und parallel zueinander angeordnet. Beim Tankrucksack 1 sind die beiden Zahnreihen 10 und 11 zunächst keilförmig auseinander laufend angeordnet, bis ein erster Faltbereich 12 durch den Abstand der Zahnreihen 10, 11 voneinander festgelegt ist. Von diesem Punkt an werden die beiden Zahnreihen 10 und 11 parallel zueinander um den Umfang der faltbaren Umfangswand 5 etwa bis zum Beginn der Parallelerstreckung herumgeführt.

Eine Schließbewegung des Schiebers des Reißverschlusses führt daher dazu, daß zunächst die keilförmigen Bereiche der Zahnreihen und anschließend die Parallelbereiche der beiden Zahnreihen miteinander unter Einfaltung des dazwischen liegenden faltbaren Bereichs der Umfangswand miteinander verklammert werden. Der Tankrucksack hat dann die in Fig. 2 der Zeichnung dargestellte Volumengröße.

Die sich daran anschließende Führung der Zahnreihen 10, 11 zeigt wiederum eine keilförmige Erweiterung, die in Fig. 2 der Zeichnung mit der Bezugsziffer 13 verdeutlicht ist, bis ein zweiter Faltbereich 14 festgelegt ist. Hieran schließt sich wiederum eine umlaufende Parallelanordnung der Zahnreihen 10, 11 an.

Wird die Schließbewegung des Schiebers nach Erreichen des ersten Verstellbereichs fortgeführt, findet eine Einfaltung des zweiten Verstellbereichs statt und verkleinert sich das Volumen des Tankrucksacks auf die in Fig. 1 der Zeichnung dargestellte Größe. Die beiden Verstellbereiche können durch Laschenverschlüsse separat fixiert werden, was in der Zeichnung durch die außen an-

- 6 -

gebrachten Laschen 15 verdeutlicht sein soll.

Der abnehmbare Rucksackteil erstreckt sich bis zum Boden 7, in welchem eine mittige Ausnehmung 16 freigelassen ist, in welche ohne Beschädigung des Tanks ein Tragegriff 17 des abnehmbaren Rucksackteils unterbringbar ist.

Fig. 4 der Zeichnung zeigt den Deckel 3 in abgeklappter Position, in der das Volumen des Tankrucksacks in einfacher Weise füllbar ist. Auf dem Deckel 3 ist außen ein klarsichtiges Kartenfach 19 ausgebildet.

Ansprüche :

1. Tankrucksack für Motorräder mit einem gepolsterten Boden, über dem ein abnehmbarer separater Rucksackteil angeordnet ist, dadurch gekennzeichnet , daß der separate Rucksackteil (8) eine faltbare Umfangswand (5) hat und mit Verstellmitteln (4) zur variablen Einstellung des Aufnahmevolumens versehen ist.

2. Tankrucksack nach Anspruch 1, dadurch gekennzeichnet, daß die Verstellmittel (4) aus einem Reißverschluß bestehen, dessen zwei Zahnreihen (10, 11) in einem den gewünschten Verstellbereich (12) erfassenden Abstand zueinander umlaufend an der faltbaren Umfangswand (5) befestigt sind.

3. Tankrucksack nach Anspruch 2, dadurch gekennzeichnet, daß der Anfang (9) des Reißverschlusses (4) mittig in der Umfangswand (5) befestigt ist, daß die beiden Zahnreihen (10, 11) dann keilförmig auseinander laufend angeordnet sind bis ein erster Faltbereich (12) durch den Abstand der Zahnreihen (10, 11) voneinander festgelegt ist, daß daran anschließend die beiden Zahnreihen (10, 11) parallel zueinander um den Umfang des Rucksackteils (8) bis zum Beginn der Parallelerstreckung herumgeführt sind, daß hieran anschließend erneut eine keilförmige Erweiterung (13) bis zur Festlegung eines zweiten Faltbereichs (14) vorgesehen ist, an die sich wiederum eine umlaufende Parallelanordnung der Zahnreihen (10, 11) anschließt.

4. Tankrucksack nach einem der Ansprüche 1 bis 3, dadurch gekennzeichnet, daß die verschiedenen Verstellbereiche (12, 14) durch Laschenverschlüsse (15) separat fixierbar sind.

5. Tankrucksack nach einem der Ansprüche 1 bis 4, dadurch gekennzeichnet, daß der abnehmbare Rucksackteil (8) sich bis zum Boden (7) erstreckt, in dem eine mittige Ausnehmung (16) zur Aufnahme eines Tragegriffs (17) des abnehmbaren Rucksackteils (8) vorgesehen ist.

6. Tankrucksack nach einem der Ansprüche 1 bis 5, dadurch gekennzeichnet, daß der abnehmbare Rucksackteil (8) einen mittels Reißverschluß (2) abklappbaren Deckel (3) aufweist, in dem außen ein klarsichtiges Kartenfach (19) ausgebildet ist.

- 9 -

Bezugszeichenliste:

| | |
|---|---|
| 1 | Tankrucksack |
| 2 | Reißverschluß |
| 3 | Deckel |
| 4 | Reißverschluß |
| 5 | Umfangswand |
| 6 | Reißverschluß |
| 7 | Boden |
| 8 | Rucksackteil |
| 9 | Reißverschlußbeginn |
| 10 | Zahnreihe |
| 11 | Zahnreihe |
| 12 | Faltbereich |
| 13 | Erweiterung |
| 14 | Faltbereich |
| 15 | Lasche |
| 16 | Ausnehmung |
| 17 | Tragegriff |
| 19 | Kartenfach |

R/ro

Fig.1

Fig.2

Fig.3

Fig.4

3

Fig.5

**0044414**

Nummer der Anmeldung

EP 81 10 4742.2

## EUROPÄISCHER RECHERCHENBERICHT

**Europäisches Patentamt**

### EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - U1 - 7 730 865 (H. RÖMER GMBH & CO.)   * ganzes Dokument * | 1,2, 5,6 |
| | --- | |
| | DE - U - 7 622 702 (H. RÖMER)   * Fig. A und B * | 1,6 |
| | --- | |
| | DE - A - 1 632 529 (H.G. DYKE)   * Fig. 42 * | 2,3 |
| | --- | |
| A | FR - A - 1 557 297 (FAVO) | |
| | --- | |
| A | CH - A - 295 270 (W. KEPPER) | |
| | --- | |
| P,X | DE- U1 - 8 019 414 (H. GERICKE GMBH & CO. KG)   * ganzes Dokument * | 1-6 |
| | ---- | |

### KLASSIFIKATION DER ANMELDUNG (Int. Cl.³)

B 60 R 11/00
A 45 C 7/00
B 62 J 7/00

### RECHERCHIERTE SACHGEBIETE (Int. Cl.³)

A 45 C 7/00
A 45 F 3/00
B 60 R 21/00
B 62 J 7/00
B 62 J 9/00

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 10-08-1981 | BECKER |

EPA form 1503.1 06.78